## Europäisches Patentamt

## European Patent Office

## Office européen des brevets

(11) Veröffentlichungsnummer: **0 148 405**
**B1**

(12) **EUROPÄISCHE PATENTSCHRIFT**

(45) Veröffentlichungstag der Patentschrift:
**12.10.88**

(21) Anmeldenummer: **84114686.3**

(22) Anmeldetag: **03.12.84**

(51) Int. Cl.⁴: **B 23 K 7/10**

(54) **Verfahren zur Kantenfindung einer auf eine Werkstückkante zubewegten, gasausströmenden Schweiss- und/oder Schneiddüse.**

(30) Priorität: **13.12.83 DE 3344933**
**02.11.84 DE 3440065**

(43) Veröffentlichungstag der Anmeldung:
**17.07.85 Patentblatt 85/29**

(45) Bekanntmachung des Hinweises auf die Patenterteilung:
**12.10.88 Patentblatt 88/41**

(84) Benannte Vertragsstaaten:
**AT BE CH FR GB IT LI NL SE**

(56) Entgegenhaltungen:
**DE-A-1 918 647**
**DE-A-1 918 648**
**DE-A-1 948 554**
**DE-A-2 710 646**
**DE-A-3 034 977**

(73) Patentinhaber: **MESSER GRIESHEIM GMBH,**
**Hanauer Landstrasse 330, D-6000 Frankfurt/Main 1**
**(DE)**

(72) Erfinder: **Nicolai, Manfred, Dr., Wienerstrasse 60,**
**D-6100 Darmstadt (DE)**

## Beschreibung

Die Erfindung betrifft ein Verfahren zur Kantenfindung nach dem Oberbegriff des Anspruchs 1 oder 2.

Um bei einer Schweiß- und/oder Schneidanlage, insbesondere bei einer stationären Schweiß- und/oder Schneidanlage die Abweichung in der Soll-Ist-Lage des zu bearbeitenden Werkstückes auszugleichen, muß das Schweiß- und/oder Schneidwerkzeug mittels eines reduzierten Maschinenvorschubes von Hand gesteuert an die Werkstückkante herangefahren und anschließend das Schweiß- und/oder Schneidwerkzeug an der Werkstückkante von Hand gesteuert poisitioniert werden. Dabei ist einerseits zur Werkstückkantenfindung Bedienungspersonal erforderlich und andererseits ist die Positionierung des Schweiß- und/oder Schneidwerkzeuges an der Werkstückkante mit reduziertem Maschinenvorschub zeitintensiv.

Dies führt zur Erhöhung der Maschinennebenkosten und somit zur Verteuerung des Endprodukts.

Weiterhin ist die Anfahrgenauigkeit an die Werkstückkante von dem Bedienungspersonal abhängig, wobei individuelle Fehler zu erhöhten Ausschuß- und Maschinenkosten führen.

Aus der DE-A1-2 710 646 ist eine Brennschneidmaschine mit einem Schneidbrenner bekannt, dessen Schneiddüse von einer Lärmschutzhaube umgeben ist. Während des Brennschneidvorganges, d. h. bei über dem Werkstück angeordneter Lärmschutzhaube wird im Haubeninnenraum ein erhöhter statischer Druck aufgebaut, der beim Erreichen der Werkstückkante abnimmt. Dadurch wird die Lärmschutzhaube in ihrer Lage verändert und löst über diese Lageveränderung ein Steuersignal aus, das nach einer gewissen zeitlichen Verzögerung, die ausreichend ist, den Restschnitt zu beenden, den Schneidbrenner ausschaltet.

Mit der Nutzung dieser Methode sind jedoch einerseits die Kollisionsgefahren innerhalb des Bearbeitungsraumes sehr groß und andererseits ist keine Anfangskantenfindung möglich. Das genaue Finden der Werkstückkante, wie es beispielsweise vor dem Öffnen des Schneidsauerstoffes beim Heizen erforderlich ist, ist mit dieser bekannten Einrichtung nicht möglich.

Nach der DE-A-1 918 647 wurde vorgeschlagen, zur Abstandsmessung zwischen einem Gasschweiß- oder Schneidgerät und einem Werkstück einen Gegendruckdetektor zu verwenden, der mit seiner konzentrischen Düsenöffnung den sekundären Staudruck eines ihn umgebenden und ausströmenden Gasstrahls erfaßt und einem Wandler zuführt, der diesen sekundären Staudruck in Steuersignale umformt.

Weiterhin wird nach der DE-A-1 918 648 zur Feststellung des "Nichtschneid"-Zustandes beim Gas-Schweißen bzw. -Schneiden vorgeschlagen, daß aus einem den Schneidbrenner umgebenden Detektor ein Druckmedium austritt, dessen jeweiliger Auftreffdruck als Gegendruck erfaßt wird, wobei je nach dem, ob das Gas als Flamme oder unverbrannt aus der Düse ausströmt, zur Kennzeichnung dieser "Nichtschneid"-Zustände die unterschiedlichen auf das Druckmedium wirkenden Gegendrücke dienen.

Der Erfindung liegt die Aufgabe zugrunde, das Finden einer Werkstückkante zu vereinfachen. Dabei soll das Schweiß- und/ oder Schneidwerkzeug schnell und mit ausreichender Genauigkeit an der Werkstückkante positioniert und die Werkstückkante ohne zusätzlich in dem Arbeitsraum der Schweiß- und/ oder Schneidanlage angeordnete Armaturen gefunden werden.

Diese Aufgabe wird bei einem gattungsgemäßen Verfahren zur Kantenfindung durch die kennzeichnenden Merkmale des Anspruches 1 oder 2 und bei gattungsgemäßen Einrichtungen durch die kennzeichnenden Merkmale der Ansprüche 4 und 5 gelöst.

Die mit der Erfindung erzielten Vorteile bestehen besonders darin, daß statt eines langsamen, ungenauen und mit individuellen Fehlern des Bedienungspersonals ablaufenden Verfahrens zur Kantenfindung nun eine schnelle, genaue und jederzeit reproduzierbare automatische Kantenfindung stattfindet.

Mit der vorzugsweisen Verwendung der Schweiß- und/oder Schneidgase als Meßgas wird ein in der Schweiß- und/oder Schneiddüse integrierter Sensor geschaffen, der als eine Baueinheit ausgebildet ist und mit welchem zusätzliche Kollisionsgefahren innerhalb des Arbeitsraumes, wie sie besonders bei außerhalb des Brenners angeordneten Sensoren bekannt geworden sind, vermieden werden. Selbstverständlich ist es auch möglich, als Meßgas die bei den Schweiß- und/oder Schneidanlagen vorhandene Druckluft zu verwenden. Die günstigste sensorische Einrichtung der jeweiligen Schweiß- und/oder Schneidanlage besteht aus einer Schweiß- und/oder Schneiddüse, die gegebenenfalls von einer Meßdüse mit vorzugsweise ringförmiger Öffnung umgeben ist. Durch die Verwendung der gasausströmenden Schweiß- und/oder Schneiddüse zur Kantenfindung wird in einfachster Art und Weise ein auf den verschiedensten Anlagen der Schweiß- und Schneidtechnik einsetzbarer Sensor geschaffen, der durch eine hohe Betriebssicherheit bei robuster Beanspruchung gekennzeichnet ist.

Drei Ausführungsbeispiele der Erfindung sind in den Zeichnungen dargestellt und werden im folgenden näher beschrieben.

Es zeigen:

Fig. 1 in schematischer Form den Aufbau eines Ausführungsbeispieles bei einer Brennschneideinrichtung;

Fig. 2 in schematischer Schnittdarstellung die Teilansicht eines Sensors, bei welchem das aus dem Kanal des Heizgases/Heizsauerstoffes ausströmende Gas als Meßgas verwendet wird.

Fig. 3 in schematischer Schnittdarstellung die Teilansicht eines Sensors, bei welchem das aus dem zentralen Schneidsauerstoffkanal ausströmende Gas als Meßgas verwendet wird.

Fig. 4 in schematischer Schnittdarstellung die Teilansicht eines Sensors bei einer Lasereinrichtung.

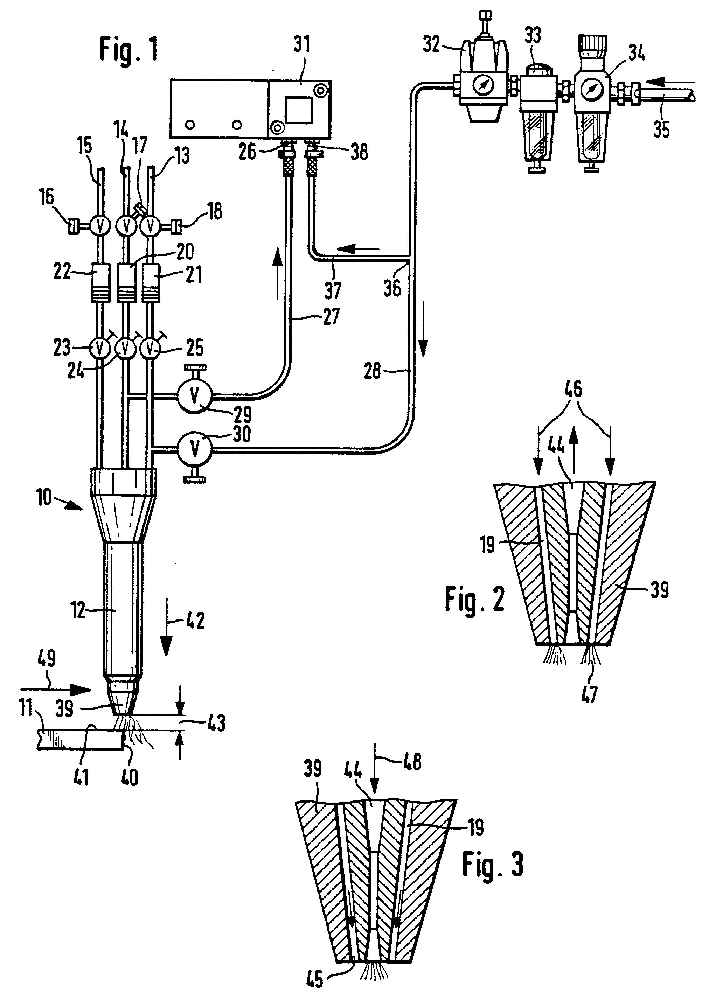

In Fig. 1 ist mit 10 eine Brennschneideinrichtung zum Schneiden von Werkstücken 11 bezeichnet. Die Brennschneideinrichtung 10 besteht aus einem Schneidbrenner 12, der an einem nicht näher dargestellten Brennerhöhenverstellungsgetriebe befestigt ist. Der ansich bekannte Schneidbrenner 12 wird über die Leitung 13 mit Heizsauerstoff über die Leitung 14 mit Schneidsauerstoff und über die Leitung 15 mit Heizgas versorgt. Innerhalb des Schneidbrenners 12 münden die Leitungen 13 und 15 in einen gemeinsamen Kanal 19 für Heizgas/Heizsauerstoff (Fig. 2). In den Leitungen 13, 14, 15 sind Absperrventile 16, 17, 18 angeordnet, die über nicht näher dargestellte Steuerleitungen mit der Steuerung der Brennschneideinrichtung 10 verbunden sind. Unterhalb dieser Absperrventile 16, 17, 18 sind in die Leitungen 13, 14, 15 Flammsperren 20, 21, 22 zur Verhinderung von Flammenrückschlägen eingebaut. Vor diesen Flammsperren 20, 21, 22, sind die am Schneidbrenner einstellbaren Regelventile 23, 24, 25 zur Mengenregelung der Gase vorgesehen. In Richtung auf das Werkstück 11 sind unterhalb der Regelventile 23, 24, 25 an die Schneidsauerstoffleitung 14 und die Heizsauerstoffleitung 13 Druckluftleitungen 27, 28 angeschlossen. In den Druckluftleitungen 27, 28 ist jeweils ein handbetätigbares Druckluftventil 29, 30 angeordnet. Die Druckluftleitung 27 ist mit dem einen Eingang 26 einer Signalvorrichtung 31, vorzugsweise einem PE-Meßwertwandler, verbunden. Die Druckluftleitung 28 ist über einen Niederdruckregler 32, einem Feinstfilter 33 und einem Grobregler mit Filter 34 an das Druckluftnetz 35 der Brennschneideinrichtung 10 angeschlossen. Vor dieser Wartungs- und Einstelleinheit 32 bis 34 ist die Druckluftleitung 28 über eine Abzweigung 36 und eine Zweigleitung 37 mit einem zweiten Eingang 38 der Signalvorrichtung 31 verbunden.

Die an dem Schneidbrenner 12 befestigte handelsübliche Düse 39, die von der Anmelderin unter dem Namen ARS Düse vertrieben wird, ist in den Figuren 2 und 3 schematisch im Teilschnitt dargestellt. Die Ausströmöffnung 45 der Düse 39 ist vorzugsweise ringförmig oder schlitzförmig ausgebildet

Zur Ermittlung der Kante 40 des Werkstückes 11 wird der Schneidbrenner 12 mit der Düse 39 aus der über dem Werkstück 11 befindlichen Parkposition auf die Werkstückoberfläche 41 (Pfeilrichtung 42) zubewegt, wobei die Signalvorrichtung 31 aktiviert ist. Über die Druckluftleitung 28 und das Druckluftventil 30 wird der Heizsauerstoffleitung 13 Speisedruckluft zugeführt. Die Speisedruckluft tritt bei geschlossenen Absperrventilen 16, 17, 18, in den Heizgas/Heizsausstoffkanal 19 und von dort aus der Düse 39 aus. Wenn der Schneidbrenner 12 eine Signalhöhe 43 von ca. 4 mm über der Werkstückoberfläche 41 erreicht hat, steigt der Signaldruck in dem zentralen Schneidsauerstoffkanal 44. Dieser Signaldruck (Überdruck) in dem zentralen Schneidsauerstoffkanal 44 schaltet die Signalvorrichtung 31 und diese schaltet den Höhenverstellmotor des Brennerhöhenverstellungsgetriebes ab. Selbstverständlich ist die Signalhöhe 43 auch mittels anderer Höhensensoren wie beispielsweise kapazitiver oder induktiver Sensoren einstellbar.

Der Überdruck in der zentralen Schneidsauerstoffleitung 14 erfolgt dabei durch das Entstehen eines Staudrucks in dem Schneidsauerstoffkanal 44.

In Folgesteuerung wird der Schneidbrenner 12 nach Erreichen der Signalhöhe 43 und Abschaltung des Höhenverstellmotors über den Querantrieb und/oder Längsantrieb quer über das Werkstück 11 gefahren. Der durch die aus dem Heizgas/Heizsauerstoffkanal 19 ausströmende Druckluft zwischen Düse 39 und Werkstückoberfläche 41 erzeugte Signaldruck steht während der Quer- und/oder Längsfahrt (Pfeilrichtung 49) in der Signalvorrichtung 31 an, bis der Schneidbrenner 12 die Kante 40 des Werkstückes 11 erreicht hat. Wenn der zentrale Schneidsauerstoffkanal 44 mittig über der Kante 40 des Werkstückes steht, fällt der aus dem Heizgas/Heizsauerstoffkanal 19 austretende Signaldruck ab.

Der Druckabfall im zentralen Schneidsauerstoffkanal 44 wird durch die nur noch mit ihrer halben Ausströmöffnung 45 über der Werkstückoberfläche 41 stehenden Düse 39 ausgelöst.

Durch die vor Schneidbeginn erfolgte Einstellung des PE-Meßwertwandlers 31 auf den nach dem Druckabfall in dem Schneidsauerstoffkanal 44 herrschenden Druck kann der Schneidbrenner 12 in jede beliebige Lage innerhalb der von den Meßgasen erfaßten Bereiche der Werkstückkante 40 gefahren werden. Nach dem erfolgten Druckabfall in dem zentralen Schneidsauerstoffkanal 44 wird die Signalvorrichtung 31 betätigt, die den nicht näher dargestellten Querantrieb und/oder Längsantrieb abschaltet.

In Fig. 2 und Fig. 3 ist die Düse 39 schematisch dargestellt, wobei mittels der Fig. 2 das Funktionsprinzip Überdruck und mittels Fig. 3 das Funktionsprinzip Unterdruck erläutert werden soll. Bei der auf Signalhöhe 43 stehenden Düse 39 in Fig. 2 tritt durch die vorzugsweise ringförmige Ausströmöffnung 45 des Kanales 19 für Heizgas/Heizsauerstoff 19 (Pfeilrichtung 46) ein Meßgas 47 aus, das beim Erreichen der Kante 40 des Werkstücks 11 in dem zentralen Schneidsauerstoffkanal 44 einen Überdruck erzeugt. Das Überdrucksignal beaufschlagt über Druckluftventil 29 und Druckluftleitung 27 den PE-Meßwandler 31, der das Drucksignal in ein elektrisches Signal umformt und den nicht dargestellten Querantrieb und/oder Längsantrieb der Brennschneideinrichtung 10 abschaltet. In einer vorteilhaften Weiterbildung tritt aus der vorzugsweise ringförmigen Ausströmöffnung des Kanales 19 für Heizgas- Heizsauerstoff das Heizgas- Heizsauerstoffgemisch (Pfeilrichtung 46) aus und wird anschließend gezündet. Die aus diesem brennenden Heizgas-Heizsauerstoffgemisch bestehende Heizflamme verbrennt hierbei die Gase. Beim Erreichen der Kante eines Werkstückes erzeugen die brennenden Gase in dem zentralen Schneid-Sauerstoffkanal 44 einen Überdruck, der wie beschrieben, in ein Signal umgeformt wird und den nicht näher dargestellten Querantrieb und/oder Längsantrieb der Brennschneideinrichtung abschaltet. Durch die Kantenfindung mit brennender Heizflamme kann der Schneidbrenner 42 von einem bearbeiteten Werkstück direkt zur Werkstückkante des nächsten noch zu bearbeitenden Werkstücks verfahren werden, ohne daß die Heizgas-Heizsauerstoffleitung geschlossen und wieder entsprechend dem Durchsatzvolumen der Düse geöffnet werden muß. Dies führt zum Fortfall von Steuereinrichtungen und somit zur Vereinfachung der Einrichtung zur Kantenfindung.

In Fig. 3 ist eine auf dem Prinzip des Unterdrucks beruhende Düse 39 dargestellt, bei der das durch den zentralen Schneidsauerstoffkanal 44 (Pfeilrichtung 48) strömende Meßgas 47 beim Erreichen der Oberfläche 41 des Werkstückes 11 in dem Kanal 19 des Heizgases/Heizsauerstoffes einen Unterdruck und dadurch ein Signal erzeugt. Erreicht der Schneidbrenner 12 die Werkstückkante 40, erfolgt ein Druckanstieg im Kanal 19 für Heizgas/Heizsauerstoff, der entsprechend den vorherigen Ausführungen zur Steuerung verwendet wird.

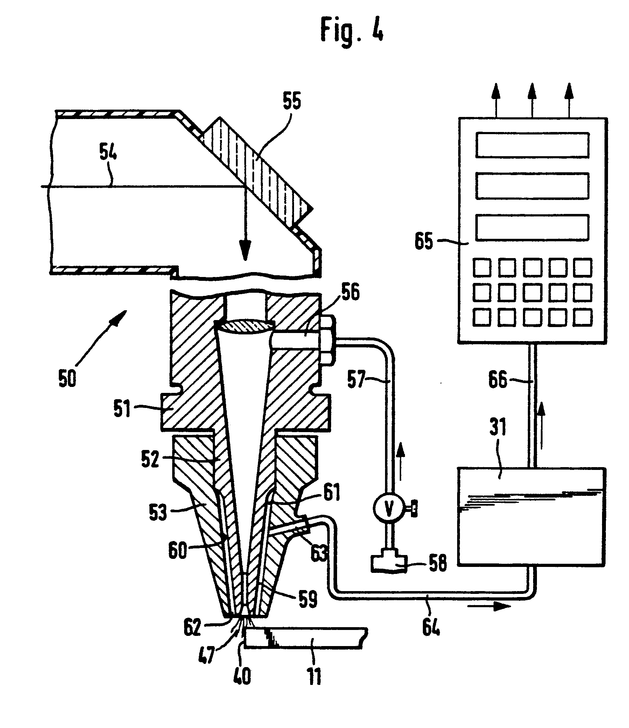

In Fig. 4 ist mit 50 eine Lasereinrichtung zum vorzugsweise Schneiden von Werkstücken 11 bezeichnet.

Die Lasereinrichtung 50 besteht aus einem höhenverschieblichen Schneidkopf 51, der in seinem unteren Teil eine Gasstrahldüse 52 und eine Meßdüse 53 trägt. Der in einem nicht dargestellten Resonator erzeugte Laserstrahl 54 wird durch einen Umlenkspiegel 55 im Schneidkopf 51 nach unten auf das Werkstück 11 gerichtet.

Koaxial mit dem Laserstrahl 54 wird über Bohrung 56, Leitung 57 und Gasversorgung 58 ein Gasstrahl 47 auf das Werkstück 11 gerichtet.

Zur Ermittlung der Kante 40 des Werkstückes 11 wird die gasausströmende Gasstrahldüse 52 auf die Werkstückkante 40 zubewegt. Der aus der Gasstrahldüse 52 austretende Gasstrahl 47 erzeugt beim Erreichen der Werkstückkante 40 in dem durch die Außenkontur 59 der Gasstrahldüse 52 und der Innenkontur 60 der Meßdüse 53 gebildeten Meßraum 61 eine Druckdifferenz.

Die Öffnung 62 der Meßdüse 53 ist vorzugsweise ringförmig ausgebildet. An dem Meßraum 61 ist über Bohrung 63 und Leitung 64 eine Signalvorrichtung 31 zur Signalbildung angeschlossen. Das in der Signalvorrichtung 31 erzeugte Signal wird der Steuerung 65 über Leitung 66 zur Steuerung des Schneidvorganges zugeführt. Die Verarbeitung des Drucksignales kann hierbei auf verschiedene Art und Weise erfolgen. So ist es beispielsweise auch möglich, das in dem Meßraum 61 erzeugte Drucksignal gegen das aus der Gasstrahldüse 52 austretende Meßgas zu schalten, so daß Schwankungen des Eingangsdruckes vernachlässigbar sind.

**Patentansprüche**

1. Verfahren zur Kantenfindung einer auf eine Werkstückkante (40) zubewegten, gasausströmenden Schweiß- und/oder Schneiddüse (39) welche einen mit Gaszuführungen (13, 14, 15, 27, 28) verbundenen Zentrumskanal (44) und mindestens einen den Zentrumskanal (44) konzentrisch umgebenden ringförmigen oder schlitzförmigen Kanal (19) mit zum Werkstück (11) gerichteten Öffnungen aufweist,

dadurch gekennzeichnet,

daß der aus dem Zentrumskanal (44) austretende Gasstrahl (47) beim Erreichen der Werkstückkante (40) in dem ringförmigen oder schlitzförmigen Kanal (19) bzw. der aus dem ringförmigen oder schlitzförmigen Kanal (19) austretende Gasstrahl (47) in dem Zentrumskanal (44) der als Sensor verwendeten Düse (39) einen Druckanstieg oder -abfall gegenüber einem vorgegebenen Ausgangsdruck erzeugt und der Druckunterschied in dem Zentrumskanal (44) bzw. dem ring- oder schlitzförmigen Kanal (19) ein Signal zur Steuerung des Schweiß- oder Schneidvorganges auslöst.

2. Verfahren zur Kantenfindung einer auf eine Werkstückkante zubewegten gasausströmenden Gasstrahldüse (52) eines Lasers (50), welche eine mit einer Gaszuführung (57) verbundene Zentrumsbohrung mit auf das Werkstück (11) gerichteter Öffnung aufweist,

dadurch gekennzeichnet,

daß der aus der Zentrumsbohrung der Gasstrahldüse (52) austretende Gasstrahl (47) beim Erreichen der Werkstückkante (40) in einem die Gasstrahldüse (52) umgebenden ringförmigen Meßraum (61) mit zum Werkstück (11) gerichteter Öffnung (62) einen Druckanstieg oder -abfall gegenüber einem vorgegebenen Ausgangsdruck erzeugt und der Druckunterschied in dem Meßraum (61) ein Signal zur Steuerung eines Schweiß- oder Schneidvorganges auslöst.

3. Verfahren nach Anspruch 1 oder 2,
dadurch gekennzeichnet,
daß der Gasstrahl aus dem brennenden Heizgas-/Heizsauerstoffgemisch gebildet wird.

4. Lasereinrichtung (50) mit einer Gasstrahldüse (52) die eine Zentrumsbohrung für den Austritt eines Laserstrahles (54) und eines Gasstrahls (47) aufweist,
dadurch gekennzeichnet,
daß die Gasstrahldüse (52) von einer Meßdüse (53) mit ringförmiger nach unten auf das Werkstück (11) gerichteter Öffnung (62) umgeben ist und daß ferner an den Meßraum (61) der Meßdüse (53) eine Signalvorrichtung (31) angeschlossen ist.

5. Brenner (12) mit einer über Zuführleitungen (13, 14, 15, 27, 28) mit Heiz- Schneid- oder Meßgasen versorgten Schweiß- oder Schneiddüse (39), welche einen Zentrumskanal (44) und mindestens einen den Zentrumskanal (44) konzentrisch umgebenden ringförmigen oder schlitzförmigen Kanal (19) mit zum Werkstück (11) gerichteten Öffnungen aufweist,
dadurch gekennzeichnet,
daß an der Heizgas-/Heizsauerstoff- oder Schneidsauerstoffleitung (13, 14, 15) eine die Schweiß- oder Schneidvorgänge steuerne Signalvorrichtung (31) angeschlossen ist.

## Claims

1. Process for the edge-finding of a gas-discharging welding and/or cutting nozzle (39) which is advanced towards a workpiece edge (40) and has a central channel (44), connected to gas feed lines (13, 14, 15, 27, 28), and at least one annular or slot-shaped channel (19), concentrically surrounding the central channel (44) and with openings directed towards the workpiece (11), characterized in that, on reaching the workpiece edge (40), the gas jet (47) leaving the central channel (44) generates in the annular or slot-shaped channel (19), or the gas jet (47) leaving the annular or slot-shaped channel (19) generates in the central channel (44) of the nozzle (39), used as sensor, a pressure increase or drop with respect to a predetermined output pressure and the pressure difference in the central channel (44) or in the annular or slot-shaped channel (19) triggers a signal for controlling the welding or cutting operation

2. Process for the edge-finding of a gas-discharging gas jet nozzle (52) of a laser (50) which is advanced towards a workpiece edge and has a central bore, connected to a gas feed line (57), and an opening directed towards the workpiece (11), characterized in that, on reaching the workpiece edge (40), the gas jet (47) leaving the central bore of the gas jet nozzle (52) generates in an annular measuring space (61) surrounding the gas jet nozzle (52) and with an opening (62) directed towards the workpiece (11) a pressure increase or drop in comparison with a predetermined output pressure and the pressure difference in the measuring space (61) triggers a signal for controlling a welding or cutting operation.

3. Process according to claim 1 or 2, characterized in that the gas jet is formed by the burning heating gas/ heating oxygen mixture.

4. Laser device (50) with a gas jet nozzle (52) which has a central bore for the outlet of a laser beam (54) and of a gas jet (47), characterized in that the gas jet nozzle (52) is surrounded by a measuring nozzle (53) with an annular opening (62), directed downwards towards the workpiece (11), and in that furthermore a signal device (31) is connected to the measuring space (61) of the measuring nozzle (53).

5. Burner (12) with a welding or cutting nozzle (39), which is supplied with heating, cutting or measuring gases via feed lines (13, 14, 15, 27, 28) and has a central channel (44) and at least one annular or slot-shaped channel (19) concentrically surrounding the central channel (44) and with openings directed towards the workpiece (11), characterized in that a signal device (31), controlling the welding or cutting operations, is connected to the heating gas/heating oxygen or cutting oxygen line (13, 14, 15).

## Revendications

1. Procédé de recherche d'arête à l'aide d'une buse de soudage et/ou de coupe (39) dirigée vers une arête de pièce (40) à usiner, cette buse étant munie d'un canal central (44) relié aux alimentations de gaz (13, 14, 15, 27, 28) et d'au moins un canal annulaire ou en forme de fente (19) entourant, de manière concentrique, le canal central (44) et ayant des ouvertures dirigées vers la pièce (11), procédé caractérisé en ce que le jet de gaz (47) sortant du canal central (44) engendre une augmentation de pression ou une chute de pression par rapport à la pression de sortie prédéterminée, lorsque le gaz atteint l'arête de la pièce (40), dans le canal annulaire ou en forme de fente (19) ou encore le jet de gaz (47) sortant du canal annulaire ou en forme de fente (19) dans le canal central (44) de la buse (39) utilisée comme capteur, et la différence de pression régnant dans le canal central (44) ou le canal annulaire ou en forme de fente (19) déclenche un signal de commande de la phase de soudage ou de coupe.

2. Procédé de recherche d'arête à l'aide d'une buse à jet de gaz (52) émettant un jet de gaz qui est dirigé vers l'arête de la pièce, avec un laser (50) et un perçage de centrage relié à l'alimentation de gaz (57) et dont l'ouverture est dirigée vers la pièce (11), procédé caractérisé en ce que le jet de gaz (47) sortant du perçage central de la buse à jet de gaz (52) crée une élévation de pression ou une chute de pression par rapport à une pression initiale prédéterminée lorsque le jet atteint l'arête (40) de la pièce dans une chambre de mesure (61) annulaire entourant la buse à jet de gaz (52) avec une ouverture (62) dirigée vers la pièce (11) et la différence de pression déclenche, dans la chambre de mesure (61) un signal de commande d'une opération de soudage ou de coupe.

3. Procédé selon la revendication 1 ou 2, caractérisé en ce que le jet de gaz est formé par un mélange combustible de gaz de chauffage et d'oxygène de chauffage.

4. Installation à laser (50) comportant une buse à jet de gaz (52) qui est munie d'un perçage central pour la sortie d'un faisceau laser (54) et d'un jet de gaz (47), installation caractérisée en ce que la buse à jet de gaz (52) est entourée par une buse de mesure (53) avec une ouverture (62) annulaire dirigée vers le bas en direction de la pièce (11) et en ce qu'en outre, un dispositif à signal (31) est relié à la chambre de mesure (61) de la buse de mesure (53).

5. Chalumeau (12) comportant une buse de soudage ou de coupe (39) alimentée en gaz chaud, en gaz de coupe ou en gaz de mesure par des conduites d'alimentation (13, 14, 15, 27, 28) et ayant un canal central (44) et au moins un canal annulaire ou en forme de fente (39) concentrique entourant le canal central (44) avec des ouvertures dirigées vers la pièce (11), chalumeau caractérisé par un dispositif de signalisation (31) commandant les phases de soudage et de coupe par les conduites de gaz de chauffage, d'oxygène de chauffage et d'oxygène de coupe (13, 14, 15).

0 148 405

Fig. 1

Fig. 2

Fig. 3

# Fig. 4